# EUROPEAN PATENT SPECIFICATION

(11) **EP 0 820 919 B1**
(45) Date of publication and mention of the grant of the patent: **20.10.1999**
(21) Application number: 97107918.1
(22) Date of filing: 15.05.1997
(51) Int. Cl.: B62H 1/02, B60K 28/00

(54) **Motorcycle start-enabling device**
Motorräder mit Startermöglichungsvorrichtung
Dispositif permettant le démarrage d'une motocyclette

(30) Priority: 24.07.1996 IT MI961556
(43) Date of publication of application: 28.01.1998
(73) Proprietor: Ducati Motor S.p.A., 40132 Bologna (IT)
(72) Inventor: Zava, Zeno, 40132 Bologna (IT); Negroni, Luciano, 40024 Castel S. Pietro, Bologna (IT)
(74) Representative: Giambrocono, Alfonso, Dr. Ing.

(56) References cited:
- FR-A- 2 625 167
- FR-A- 2 712 239
- US-A- 3 908 780
- US-A- 4 638 880
- PATENT ABSTRACTS OF JAPAN vol. 005, no. 189 (M-099), 28 November 1981 & JP 56 108313 A (YAMAHA MOTOR CO LTD), 27 August 1981,

## Description

This invention relates to a device in accordance with the introduction to the main claim.

As is well known, motorcycles (in particular medium-high power motorcycles) use devices enabling the engine starter motor to be activated and the engine to be fired only when certain parts of the vehicle are in particular working positions, and specifically the position of the side support element and of the clutch lever. One of these known devices is disclosed in US-A-4638880 These known devices use mechanical switches which are moved into a particular (closed) position by the movement of the side support element. When in this position, said switches close an electrical circuit to enable the starter motor to be activated and particular conditions to be attained (for example engine powering) enabling the engine to be fired and to be maintained in the operating state.

These known devices have however various drawbacks connected mainly with the use of traditional mechanical switches. In this respect, these switches have a limited life, are negatively affected by the vibration generated during vehicle use, are affected by moisture and can be damaged by water infiltration into the switch body. These problems can result in malfunction of such switches and hence of the devices of which they form part, with consequent possible detriment to safety during running or inability to use the vehicle.

An object of the present invention is to provide an improved device for controlling and enabling the start of a motorcycle engine in accordance with claim 1.

A particular object of the invention is to provide a device without presetting problems, which is unaffected by vehicle vibration, and does not suffer from particular problems related to physical factors (moisture and water infiltration).

A further object is to provide a device which can be easily mounted on a motorcycle and is easily accessible for normal maintenance.

These and further objects which will be apparent to the expert of the art are attained by a device in accordance with the accompanying claims.

The present invention will be more apparent from the accompanying drawings, which are provided by way of non-limiting example and in which:
Figure 1 is a block diagram of the device of the invention;
Figure 2 is a schematic cross-section through a part of the motorcycle with which a part of the device of Figure 1 is associated;
Figure 3 is a front view of a motorcycle side support element with which another part of the device of Figure 1 is associated;

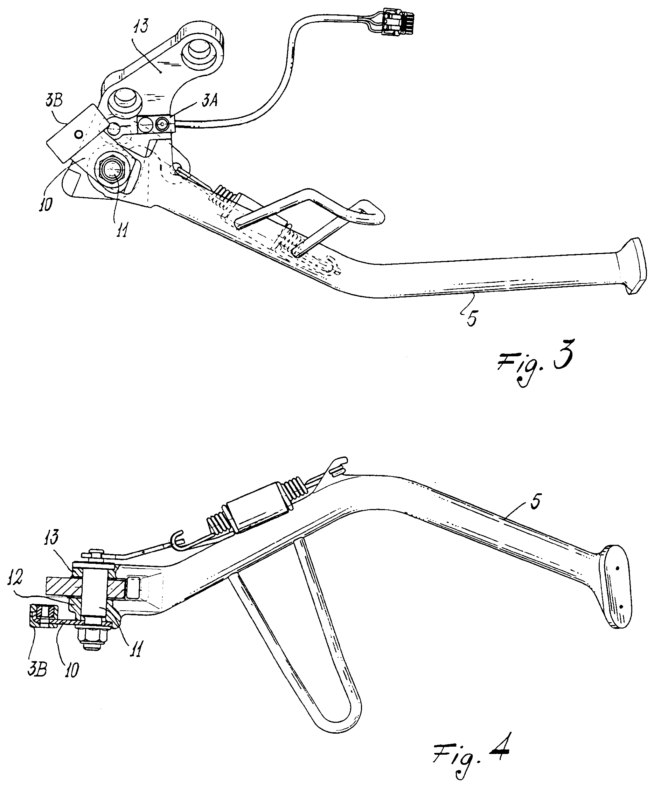

Figure 4 is a view from above of the side support element of Figure 3; and
Figure 5 is a truth table in accordance with which the device of the invention operates.

With reference to said figures, the device of the invention comprises a unit 1 for controlling the firing of a motorcycle engine and connected to sensor means 2, 3 and 4 sensing respectively the idle gear position, the position of a side support element 5 of the vehicle (ie its retracted position close to the vehicle frame, not shown, and its extended position in which it supports the motorcycle), and the position of a clutch lever 6 located on a bar or vehicle half-handlebar 7 on which there is positioned a usual handgrip 8 (ie the position away from or towards the handgrip which the lever assumes when the user wishes to operate the clutch to change its position from disengaged or engaged). The sensor means 3 and 4 are proximity sensors comprising a part 3B and 4B associated with the respective movable member (support element 5 and lever 6) and a fixed part 3A and 4A associated with that fixed part of the vehicle in front of which said member moves. The sensor 2 is a mechanical switch 2A which closes when the gear control is in the idle position.

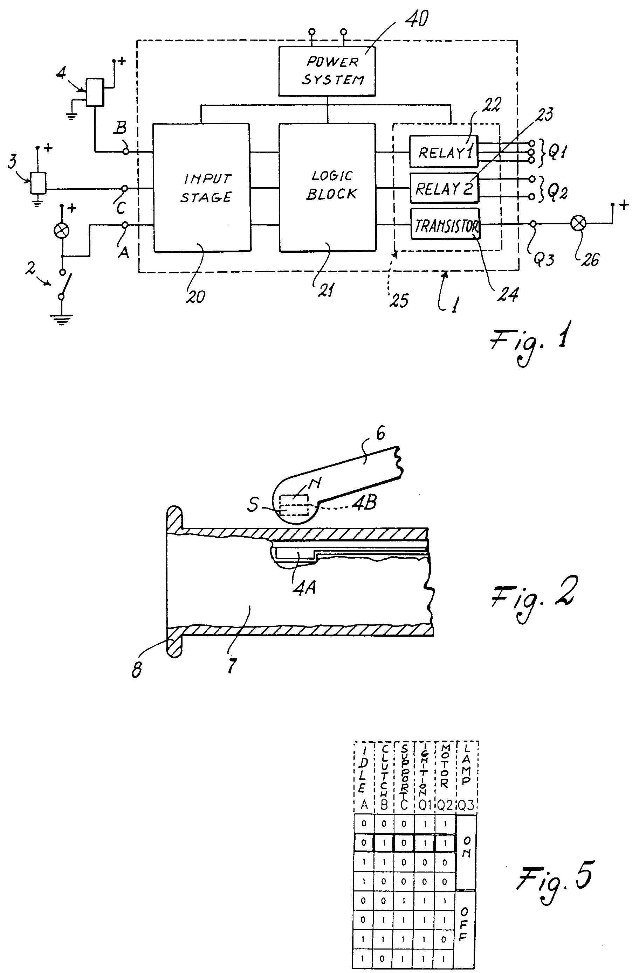

More specifically, in one embodiment, the sensors 3 and 4 are Hall effect sensors. With reference to Figure 2, such a sensor forms the fixed part 4A associated with the half-handlebar (within the handgrip 8 in any known manner) and is arranged to cooperate with a permanent magnet defining the movable part 4B of the sensor means 4 associated with the lever 6.

Likewise, the Hall effect sensor forms the fixed part 3A of the sensor means 3 associated with the side support element 5, whereas a permanent magnet, associated with the support element, forms the movable part 3B of said sensor means. The magnet 3B is supported by a plate-like arm 10 rigid with a pin 11 fixed to the support element 5 and movable with this latter within a seat 12 in a support element carrier plate 13 fixed in known manner to the motorcycle frame. The sensor 3A is positioned and fixed within this plate.

The control unit 1, preferably of logic gate type, comprises a circuit block representing the input stage 20 to which the sensors 2, 3 and 4 are connected via inputs A, C and B respectively. The block 20 is connected to a logic block 21 which, on the basis of the electrical signals originating from said sensors, activates members 22, 23 and 24 of a control block 25 which via an output Q1 controls the engine ignition parameters and members, via an output Q2 controls the activation of a starter motor, and via an output Q3 controls the activation of a display or luminous indicator 26 positioned on the vehicle dash panel. The members 22 and 23 are relay circuit blocks and the member 24 is a transistor circuit block.

The unit 1 also comprises a usual power system 40 connected to the blocks 20, 21, 25.

The logic block 21 activates the various members of the control block 25 in accordance with algorithms shown in the truth table of Figure 5, in which:
- the letter A indicates the input of the signal originating from the idle sensor; this signal is indicated for example by the logic value 0 if the handgrip control is in idle, or 1 if in engaged;
- the letter B indicates the input of the signal originating from the sensor 4 indicating the position of the clutch lever 6 or the clutch control; the logic value 0 indicates for example that the lever is positioned close to the handgrip 8 and 1 indicates that it is distant therefrom;
- the letter C indicates the input of the signal originating from the sensor 3 located on the support element; the logic value 0 indicates for example that the support element is in its extended position distant from the motorcycle frame, and 1 indicates that it is in its retracted position close to said frame;
- Q1, Q2, Q3 indicate the outputs of the unit 1 as heretofore defined. In particular:
- the output Q1 can assume logic values 0 or 1 respectively indicating, for example, a negation or an assent of said unit to the firing of the engine (by means of appropriate control of the members which enable it) or to the maintaining of engine operation;
- the output Q2 can assume logic values 0 or 1 respectively indicating, for example, a negation or an assent of the unit 1 to the activation of the engine starter motor;
- the output Q3 enables the unit 1 to set the indicator 26 to ON or OFF.

It will now be assumed that the device of the invention is to be used. It will be assumed specifically that the gear is in idle (logic value 0), that the clutch lever is in the extended position (logic value 1) and that the support element is extended (logic value 0). This corresponds to the second line (in black) of the table of Figure 5.

Under these conditions, the unit senses that the engine is disconnected from the user item (wheel) and hence gives assent (logic state 1) to its start by activating the starter motor. At the same time it activates the indicator or warning lamp 26.

In the condition represented by the seventh line from the top of the table of Figure 5 (vehicle use condition), activation of the starter motor is excluded. This is the condition in which the support element is retracted and the engine transmits power to the wheel.

The device of the invention hence preferably uses the unit 1. This unit could however be replaced by a microprocessor which implements the conditions shown in Table 5.

The use of a microprocessor enables the motorcycle to be provided with a possible coded anti-theft device; alternatively the code for the vehicle user can be implemented by feeding signals to this unit by suitably moving the lever 6 and/or the support element 5.

A preferred embodiment of the invention has been described. Others are however possible (such as one in which for example the sensor 2 is also a Hall effect sensor or the sensors 3 and 4 are inductive sensors) while remaining within the scope of the present document.

## Claims

1. A motorcycle having an engine start-enabling device, comprising a frame, a starter motor for said engine, a member for transmitting the power generated by said engine to a wheel, a clutch located on said member, a movable element (6) for manually operating said clutch arranged to set this latter in at least two working positions, namely an idle position and a motion engagement position, a motorcycle side support element (5) movable between two working positions, namely a retracted position and an extended position in which it supports the vehicle, engine start control means (1), and means (3, 4) for sensing the position of the clutch moveable element (6) relative to a fixed vehicle part (8) with which it is associated, and for sensing the position of the side support element (5) relative to a fixed frame part (13), characterised in that the sensor means (3, 4) are proximity sensor means comprising two mutually cooperating spaced-apart portions (3A, 3B; 4A, 4B), a first portion (3A, 4A) being associated with said fixed parts (13, 8) and the second (3B, 4B) being associated with the movable elements (5, 6), whereby said start-enabling device is controlled.

2. A motorcycle as claimed in claim 1, characterised in that the sensor means (3, 4) comprise a Hall effect sensor.

3. A motorcycle as claimed in claim 2, characterised in that the Hall effect sensor defines the first portion (3A, 4A) of each sensor means, the second portion (3B, 4B) being a permanent magnet.

4. A motorcycle as claimed in claim 3, characterised in that the Hall effect sensor (3A) of the sensor means (3) associated with the side support element (5) is fixed to a support element carrier plate (13), the permanent magnet (3B) being rigid with said side support element(5).

5. A motorcycle as claimed in claim 3, characterised in that the Hall effect sensor (4A) of the sensor means (4) associated with the clutch operating element (6) is fixed to the half-handlebar of the motorcycle, the permanent magnet being rigid with said clutch moveable element (6).

6. A motorcycle as claimed in claim 5, characterised in that the Hall effect sensor is positioned inside the handgrip.

7. A motorcycle as claimed in claim 1, characterised in that the control means are a unit (1) for controlling the starter motor operation and the engine start conditions, said unit receiving the electrical signals generated by the sensor means (2, 3, 4) and on the basis thereof acting on said motor, on an indicator lamp (26) for the position of the side support element (5) of the motorcycle, and on usual engine parts for firing it and maintaining it in operation.

8. A motorcycle as claimed in claim 7, characterised in that the control unit (1) is a microprocessor.

9. A motorcycle as claimed in claim 7, characterised in that the control unit (1) is a logic gate electrical circuit.

10. A motorcycle as claimed in claim 7, characterised in that the control unit (1) and the sensor means (3, 4) define a vehicle antitheft circuit.

11. A motorcycle as claimed in claim 1, characterised in that the sensor means are inductive sensors.

## Patentansprüche

1. Ein Motorrad mit einer einen Motorstart zulassenden Vorrichtung, umfassend einen Rahmen, einen Startermotor für den Motor, ein Glied zum Übertragen der vom Motor abgegebenen Leistung auf ein Rad, eine an diesem Glied angeordnete Kupplung, ein bewegliches Element (6) zum manuellen Betätigen der Kupplung, welches angeordnet ist zum Einstellen der Letzteren in wenigstens zwei Arbeitspositionen, nämlich eine Leerlaufposition und eine Bewegungseingriffsposition, ein in zwei Arbeitspositionen bewegliches Motorrad-Seitenstützelement (5), das beweglich ist zwischen einer eingezogenen Position und einer ausgefahrenen Position, in der es das Fahrzeug abstützt, Motorstart-Steuereinrichtungen (1) und Einrichtungen (3, 4) zum Abtasten der Position des beweglichen Kupplungsbetätigungselementes (6) relativ zu einem fixierten Fahrzeugteil (8), welchem es zugeordnet ist, und zum Abtasten der Position des Seitenstützelementes (5) relativ zu einem fixierten Rahmenteil (13), **dadurch gekennzeichnet**, daß die Abtasteinrichtungen (3, 4) Näherungssensoreinrichtungen sind, die zwei gegenseitig kooperierende, beabstandete Bereiche (3A, 3B; 4A, 4B) umfassen, von denen ein erster Bereich (3A, 4A) den besagten fixierten Teilen (13, 8) zugeordnet ist, während der zweite (3B, 4B) den beweglichen Elementen (5, 6) zugeordnet ist, wodurch die besagte Vorrichtung zum Zulassen eines Motorstarts gesteuert ist.

2. Motorrad, wie in Anspruch 1 beansprucht, **dadurch gekennzeichnet**, daß die Abtasteinrichtungen (3, 4) einen Hall-Effekt-Sensor aufweisen.

3. Motorrad, wie in Anspruch 2 beansprucht, **dadurch gekennzeichnet**, daß der Hall-Effekt-Sensor den ersten Bereich (3A, 4A) jede Abtasteinrichtung definiert und daß der zweite Bereich (3B, 4B) ein Permanentmagnet ist.

4. Motorrad, wie in Anspruch 3 beansprucht, **dadurch gekennzeichnet**, daß der dem Seitenstützelement (5) zugeordnete Hall-Effekt-Sensor (3A) der Abtasteinrichtungen (3) an einer Stützelement-Tragplatte (13) befestigt ist, während der Permanentmagnet (3B) starr verbunden ist mit dem Seitenstützelement (5)

5. Motorrad, wie in Anspruch 3 beansprucht, **dadurch gekennzeichnet**, daß der dem Kupplungs-Betätigungselement (6) zugeordnete Hall-Effekt-Sensor (4A) der Abtasteinrichtungen (4) an der Lenkerhälfte des Motorrades befestigt ist, während der Permanentmagnet (4B) mit dem beweglichen Kupplungsbetätigungselement (6) fest verbunden ist.

6. Motorrad, wie in Anspruch 5 beansprucht, **dadurch gekennzeichnet**, daß der Hall-Effekt-Sensor (4A) im Inneren des Lenker-Handrohres positioniert ist.

7. Motorrad, wie in Anspruch 1 beansprucht, **dadurch gekennzeichnet**, daß die Steuereinrichtungen eine Einheit (1) zum Steuern des Betriebs des Startermotors und der Motor-Startkonditionen ist, wobei die Einheit die elektrischen Signale erhält, die von den Abtasteinrichtungen (2, 3, 4) generiert werden und deren Basis auf den Motor einwirkt, und auch auf der Basis einer Anzeigelampe (26) für die Position des Seitenstützelementes (5) des Motorrads, und auch einwirkt auf übliche Motorteile zum Zünden und zum Aufrechterhalten seines Betriebs

8. Motorrad, wie in Anspruch 7 beansprucht, **dadurch gekennzeichnet**, daß die Steuereinheit (1) ein Mikroprozessor ist.

9. Motorrad, wie in Anspruch 7 beansprucht, **dadurch gekennzeichnet**, daß die Steuereinheit (1) ein elektrischer Schaltkreis mit einem logischen Gatter ist.

10. Motorrad, wie in Anspruch 7 beansprucht, **dadurch gekennzeichnet**, daß die Steuereinheit (1) und die Abtasteinrichtung (3, 4) einen Fahrzeug-Diebstahlschutz-Schaltkreis definieren.

11. Motorrad, wie in Anspruch 1 beansprucht, **dadurch gekennzeichnet**, daß die Abtasteinrichtungen induktive Sensoren sind.

## Revendications

1. Motocyclette dotée d'un dispositif permettant le démarrage du moteur et comprenant un cadre, un démarreur pour ledit moteur, un élément transmettant à une roue la puissance générée par ledit moteur, un embrayage situé sur ledit élément, un élément mobile (6) permettant d'actionner manuellement ledit embrayage pour placer ce dernier dans au moins deux positions de travail, à savoir une position de débrayage et une position d'embrayage, un élément de support latéral de la motocyclette (5) mobile entre deux positions de travail, à savoir une position rétractée et une position déployée dans laquelle il supporte le véhicule, un moyen de commande du démarrage du moteur (1) et des moyens (3, 4) servant à détecter la position de l'élément mobile d'embrayage (6) par rapport à une pièce fixe du véhicule (8) à laquelle il est associé ainsi qu'à détecter la position de l'élément latéral de support (5) par rapport à une pièce fixe du cadre (13), caractérisée en ce que les moyens de détection (3, 4) sont des capteurs de proximité comprenant deux parties distantes mais coopérant entre elles (3A, 3B ; 4A, 4B), la première partie (3A, 4A) étant associée auxdites pièces fixes (13, 8) et la seconde (3B, 4B) étant associée aux éléments mobiles (5, 6), les dispositions précédentes permettant de commander le démarrage.

2. Motocyclette selon la revendication 1, caractérisée en ce que les moyens de détection (3, 4) comprennent un capteur à effet Hall.

3. Motocyclette selon la revendication 2, caractérisée en ce que le capteur à effet Hall correspond à la première partie (3A, 4A) de chaque moyen de détection, la seçonde partie (3B, 4B) étant un aimant permanent.

4. Motocyclette selon la revendication 3, caractérisée en ce que le capteur à effet Hall (3A) du moyen de détection (3) associé à l'élément de support latéral (5) est fixé à une plaque portante (13) de l'élément de support, l'aimant permanent (3B) étant monté rigide sur ledit élément de support latéral (5).

5. Motocyclette selon la revendication 3, caractérisée en ce que le capteur à effet Hall (4A) du moyen de détection (4) associé à l'élément d'actionnement de l'embrayage (6) est fixé à une moitié du guidon de la motocyclette, l'aimant permanent (4B) étant monté rigide sur ledit élément mobile d'embrayage (6).

6. Motocyclette selon la revendication 5, caractérisée en ce que le capteur à effet Hall est placé à l'intérieur de la poignée du guidon.

7. Motocyclette selon la revendication 1, caractérisée en ce que les moyens de commande consistent en une unité (1) de contrôle du fonctionnement du démarreur et des conditions de démarrage du moteur, ladite unité recevant les signaux électriques générés par les moyens de détection (2, 3, 4), sur la base desquels elle agit sur ledit moteur, sur un voyant lumineux (26) indiquant la position de l'élément de support latéral (5) de la motocyclette et sur les pièces classiques du moteur permettant de mettre en marche et de maintenir en fonctionnement ce dernier.

8. Motocyclette selon la revendication 7, caractérisée en ce que l'unité de commande (1) est un microprocesseur.

9. Motocyclette selon la revendication 7, caractérisée en ce que l'unité de commande (1) est un circuit électrique porte logique.

10. Motocyclette selon la revendication 7, caractérisée en ce que l'unité de commande (1) et les moyens de détection (3, 4) forment un circuit antivol pour véhicule.

11. Motocyclette selon la revendication 1, caractérisée en ce que les moyens de détection sont des capteurs inductifs.
